# EUROPEAN PATENT APPLICATION

(11) **EP 4 683 427 A1**
(43) Date of publication of application: **21.01.2026**
(21) Application number: 23926937.6
(22) Date of filing: 24.05.2023
(51) Int. Cl.: H05B 3/44, H05B 3/10

(54) **SQUARE BLOCK-TYPE CERAMIC ELECTRIC HEATING BODY**

(30) Priority: 13.03.2023 CN 202310235855
(71) Applicant: CHONGQING LE-MARK TECHNOLOGY CO., LTD., Jiulongpo District Chongqing 401329 (CN)
(72) Inventor: LEIGH, Peter, Chongqing 401329 (CN)
(74) Representative: Pons IP
(86) International application number: PCT/CN2023/096027
(87) International publication number: WO 2024/187587

(57) **Abstract**

The present invention is a square block-type ceramic electric heating body, which comprises an outer conductive layer, an outer resistive layer, an inner insulating layer and an inner insulating reinforcement layer, wherein the outer conductive layer is located at upper segments on two sides of the outer resistive layer, and a positive electrode site and a negative electrode site are provided on an end face of the outer conductive layer. The cross section of the square block-type ceramic electric heating body is a square structural body. The square block-type ceramic electric heating body further comprises a head conductive layer, which wraps around a bottom end of the outer resistive layer. The premature fracture caused by cyclic impacts of thermal stresses is avoided, and changes in resistance distribution and migration of a temperature region brought about by the continuous expansion of a stress crack are also avoided.

## Description

### TECHNICAL FIELD

The present disclosure relates to an electric heating element and particularly to a square block-type ceramic electric heating element.

### BACKGROUND

A ceramic electric heating element, as a conductor material, can be used as an electric heating element of an ignition mechanism, and achieves ignition and heating by means of the extremely high temperature of ceramic at the instant of energizing. It may be applied to the fields of engine ignition, gas stove ignition, water heater ignition, infrared radiation sources, oxygen sensor heating, soldering tip heating, etc. The electric heating element made of a ceramic material has the advantages such as quick start-up, high-temperature resistance, corrosion resistance, high strength and long life.

Chinese patent application No. CN 109526079 A discloses a high-voltage ceramic electric heating element comprising a body, wherein the body is in a hollow shape having an opening at the tail, and a slot extending through from left to right is axially provided in the body, and wherein an outer resistive layer of the body is provided with a temperature control zone of which the cross-sectional area is smaller than the cross-sectional area of the body. With the high-voltage ceramic electric heating element of the present disclosure, the product strength and use reliability can be improved.

The shortcomings are: in this invention, although damages to weak portions during up and down movement of temperature zones are avoided by controlling the temperature control zone using a functional layered structure, prolonging the service life of the ceramic electric heating element, during practical use, the temperature zones will move gradually with the increase of use time, especially when the temperature zones are exposed during subsequent use, resulting in the problem of inconsistent temperature zones of the ceramic body during use.

### SUMMARY

To solve the problem of inconsistent temperature zones of a ceramic body during use due to gradual movement of the temperature zones during use of the ceramic electric heating element in the prior art, the present disclosure provides a square block-type ceramic electric heating element comprising an outer conductive layer, an outer resistive layer, an inner insulating layer and an inner insulating reinforcement layer, wherein the outer conductive layer is located at upper segments on two sides of the outer resistive layer, and a positive electrode site and a negative electrode site are provided on an end face of the outer conductive layer; and wherein the cross section of the square block-type ceramic electric heating element is square.

In this solution, the square block-type ceramic electric heating element has a longitudinal slot of a high-voltage product in the prior art eliminated, effectively improving the product strength, avoiding the quality defect of a slot structure during production, and ensuring the control over temperature zones of the heating element during use and prolonging the service life of the product while increasing the product pass rate. Moreover, in the prior art, the ceramic body can only be sintered from top to bottom by means of a vertical-state sintering process. In this solution, the ceramic electric heating element having a square block-type structure can be sintered in any orientation during sintering, and also has the advantages of no deformation and quick furnace loading, resulting in the increased product pass rate and improved processing efficiency.

Preferably, the square block-type ceramic electric heating element further comprises a head conductive layer which wraps around a bottom end of the outer resistive layer.

Preferably, the peripheral contour of a lower segment of the outer resistive layer is larger than the peripheral contour of the upper segment of the outer resistive layer, and the peripheral contour of the outer conductive layer is flush with the peripheral contour of the lower segment of the outer resistive layer.

Preferably, the square block-type ceramic electric heating element further comprises a molding channel passing through the head conductive layer, the outer resistive layer, the inner insulating layer and the inner insulating reinforcement layer.

Preferably, a molding hole is disposed at a bottom of a pouring channel, and the diameter of the molding hole is less than the width of the molding channel.

Preferably, a lower end of the molding channel is connected to the molding hole via an arc-shaped segment.

Preferably, a bottom end face of the outer conductive layer tapers towards a center of the square block-type ceramic electric heating element.

The present disclosure has the following advantageous effects:
1. The square block-type ceramic electric heating element of the present disclosure has a longitudinal slot of the existing high-voltage product of our company eliminated, effectively improving the product strength, avoiding the quality defect of a slot structure during production, and ensuring the control over temperature zones of the heating element during use and prolonging the service life of the product while increasing the product pass rate.
2. The square block-type ceramic electric heating element of the present disclosure can be sintered in any orientation during sintering, and also has the advantages of no deformation and quick furnace loading, such that the previous slot structure is eliminated, and the existing production process is simplified, leading to the increased product pass rate, improved processing efficiency and lowered production cost. The product pass rate during production is increased from 60% to above 95%.
3. The square block-type ceramic electric heating element of the present disclosure has a switching life of greater than or equal to 100,000 times.

### BRIEF DESCRIPTION OF THE DRAWINGS

FIG. 1 is a schematic diagram of an embodiment of a square block-type ceramic electric heating element of the present disclosure; and

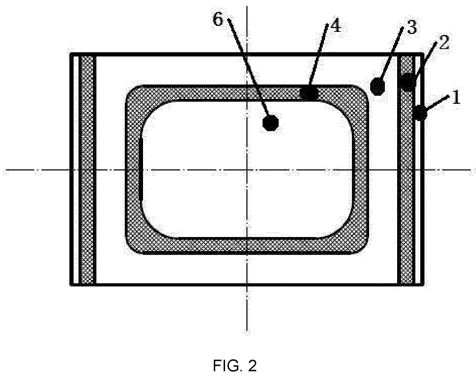

FIG. 2 is a sectional view of FIG. 1 along a line A-A.

### DETAILED DESCRIPTION OF THE EMBODIMENTS

Further detailed description is made below in combination with specific implementations:

### 1. Definitions

Electrode: An electrode is classified as a positive electrode and a negative electrode. The positive electrode is generally a cathode which obtains electrons to produce a reduction reaction. The negative electrode is an anode which losses electrons to produce an oxidization reaction.

A square structural body: **It** means that the cross section of the square block-type ceramic electric heating element is square, which is different from a cylindrical structure and a flat structure in the existing market;

Peripheral contour: It refers to an outer surface.

2. Reference numerals in the drawings of the description include: electrode site 1, outer resistive layer 2, inner insulating layer 3, inner insulating reinforcement layer 4, head conductive layer 5 and molding hole 6.

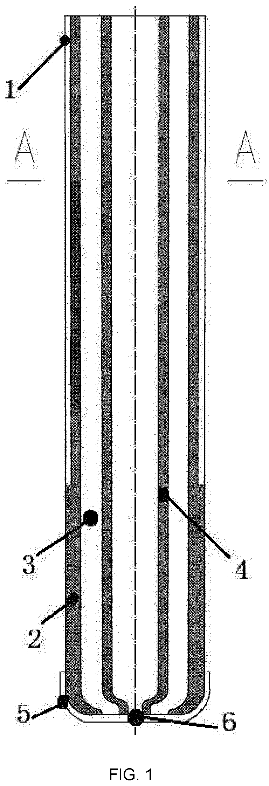

An embodiment is substantially as shown in FIG. 1: a square block-type ceramic electric heating element of which the cross section is square, wherein the electric heating element is a square structural body, and sequentially comprises, from the outside in, a head conductive layer 5, an outer conductive layer, an outer resistive layer 2, an inner insulating layer 3, an inner insulating reinforcement layer 4, and a molding channel.

The head conductive layer 5 wraps around a bottom end of the outer resistive layer 2. A bottom end face of the outer conductive layer tapers towards a center of the square block-type ceramic electric heating element. The peripheral contour of a lower segment of the outer resistive layer 2 is larger than the peripheral contour of an upper segment of the outer resistive layer 2, and the peripheral contour of the outer conductive layer is flush with the peripheral contour of the lower segment of the outer resistive layer 2. Two electrode sites 1 are provided on an end face of the outer conductive layer, the two electrode sites 1 including a positive electrode site 1 and a negative electrode site 1. The positive electrode site 1 and the negative electrode site 1 respectively the outer conductive layer is located at upper segments on two sides of the outer resistive layer 2.

The molding channel passes through the head conductive layer 5, the outer resistive layer 2, the inner insulating layer 3 and the inner insulating reinforcement layer 4. A molding hole 6 is disposed at a bottom of the molding channel. The diameter of the molding hole 6 is smaller than the width of the molding channel. A lower end of the molding channel is connected to the molding hole 6 via an arc-shaped segment.

The description hereinabove is merely an embodiment of the present disclosure. Specific well-known structures, characteristics and other common general knowledge in the solution are not described here. Those of ordinary skill in the art know all the common general knowledge in the technical field to which the present disclosure pertains before the filing date or the priority date, can learn all existing technologies in the field, and have the ability to apply the conventional experimental means before such dates. Those of ordinary skill in the art may perfect and implement this solution in combination with their self-capability under the inspiration from the present application. Some typical well-known structures or methods should not be regarded as obstacles for those of ordinary skill in the art to implement the present application. It is to be noted that for those skilled in the art, without departing from the structure of the present disclosure, several modifications and improvements may also be made, should also fall in the protection scope of the present disclosure, and will not affect the implementation effect and patent practicability of the present disclosure. The production scope as claimed by the present application shall be defined by its claims, and the descriptions such as the Detailed Description, etc. in the specification are used to explain the content of the claims.

## Claims

1. A square block-type ceramic electric heating element, comprising an outer conductive layer, an outer resistive layer, an inner insulating layer and an inner insulating reinforcement layer, wherein the outer conductive layer is located at upper segments on two sides of the outer resistive layer, and a positive electrode site and a negative electrode site are provided on an end face of the outer conductive layer; **characterized in that** the cross section of the square block-type ceramic electric heating element is square.

2. The square block-type ceramic electric heating element of claim 1, further comprising a head conductive layer which wraps around a bottom end of the outer resistive layer.

3. The square block-type ceramic electric heating element of claim 2, wherein the peripheral contour of a lower segment of the outer resistive layer is larger than the peripheral contour of the upper segment of the outer resistive layer, and the peripheral contour of the outer conductive layer is flush with the peripheral contour of the lower segment of the outer resistive layer.

4. The square block-type ceramic electric heating element of claim 3, further comprising a molding channel passing through the head conductive layer, the outer resistive layer, the inner insulating layer and the inner insulating reinforcement layer.

5. The square block-type ceramic electric heating element of any one of claims 1-4, wherein a molding hole is disposed at a bottom of a pouring channel, and the diameter of the molding hole is less than the width of the molding channel.

6. The square block-type ceramic electric heating element of claim 5, wherein a lower end of the molding channel is connected to the molding hole via an arc-shaped segment.

7. The square block-type ceramic electric heating element of any one of claims 1-6, wherein a bottom end face of the outer conductive layer tapers towards a center of the square block-type ceramic electric heating element.
